# EUROPEAN PATENT APPLICATION

(11) **EP 2 085 456 A2**
(43) Date of publication of application: **05.08.2009**
(21) Application number: 08102282.4
(22) Date of filing: 04.03.2008
(51) Int. Cl.: C10B 53/00, C10B 53/07, C10B 47/02, C10B 49/02, C10G 1/10

(54) **Pyrolytic decomposition aparatus and use therefor and methof for pyrolytically decomposing organic substances**

(30) Priority: 30.01.2008 JP 2008045221
(71) Applicant: Wilson, Paul, Hollywook, Wicklow (IE); Nakamura, Masashi, Tokyo, Jigashiyamato City (JP)
(72) Inventor: Nakamura, Masashi, Jigashiyamato City Tokyo (JP)
(74) Representative: Curley, Donnacha John

(57) **Abstract**

A pyrolytic decomposition apparatus mainly comprising: an inlet system for incorporating an object; a pyrolysis system having at least one heating chamber and a heating means which pyrolytically decomposing the object within incorporated from the inlet system; a recovery and cooling system which recovers a part of the gas generated due to the pyrolytic decomposition as an oil component through a pipe; and a gas temperature adjusting system, which makes heat exchange between a part of the gas from the recovery system and a part of the gas from pyrolysis system to allow the pyrolytically decomposed gas at a prescribed temperature for flowing into the pyrolysis system is disclosed. The apparatus is **characterized in that** said apparatus has an inert gas supply means which supply an inert gas into the pyrolytically decomposed gas as a carrier gas circulated with the apparatus.

## Description

### FIELD OF THE INVENTION

The present invention relates to a pyrolytic decomposition apparatus, such as a liquefaction/carbonization apparatus which pyrolytically decomposing an organic substance mainly into a gas, an oil and carbon. In addition, the present invention relates to various applications of the pyrolytic decomposition apparatus. Also, the present invention is directed to a method for pyrolytically decomposing organic substance into an oil component, a gas component, and a residual carbon.

### BACKGROUND OF THE INVENTION

In recent year, so-called foamed resins, etc. such as foamed styrol (polystyrene foam) are used as shock absorbers, fish boxes, trays for foodstuff, and once used become waste. As waste they present a large volume and a significant cost is involved to transport them. From the viewpoint of the fact that it is difficult to secure a landfill, they are reclaimed only with difficulty. In addition, since it is becoming difficult to provide facilities for treating wastes in a city location because of increasing land prices and opposition by residents, the facilities must be situated in the outskirts far from the place of consumption. Similarly, other plastics are daily dumped in a large amount. So, there is a strongly requirement to develop a method for treating plastics in a recyclable manner. From this persepective, liquefaction/carbonization apparatus (or simply referred to as liquefied apparatus), have been developed, which convert large amounts of plastics such as foamed resin into oil with good efficiency at a low cost

For example, USP 5,836,524 discloses a one-step thermal treatment process for liquefaction of solid wastes selected from the group consisting of printed circuit board wastes, plastic wastes, rubber wastes, scrap fires, used cables/wires, auto shredder residues, contaminated soils, and waste lubricating oils to recover valuable oil products. Apparatus is provided and includes a means for continuous feeding, an inclined screw liquefaction reactor(ISLR), and means for handling oils and gas products. Wastes are liquefied in used lubricating oils or recycled heavy oil product at relatively low temperatures, and unliquefied inorganic materials are recovered.

Also, JPA2005-154509 discloses a liquefaction/carbonization apparatus which comprises a pyrolysis tank for vaporizing waste plastics by pyrolysis, a catalytic decomposition tank for thermally decomposing the obtained pyrolysis gases in the presence of a silicate catalyst, and a refluxer for separating high-boiling point components from gases from the catalytic decomposition tank, where a decomposition residue-discharging tank is arranged at the bottom of the pyrolysis tank and the residue is sucked out in a reduced pressure state and re-heated to be perfectly thermally pyrolyzed. According to this apparatus, residues formed in pyrolysis tanks can be safely discharged and the need for suspension of operations therefor in an apparatus for a chemical recycling method for pyrolyzing waste plastics can be eliminated to reutilize them as raw materials for petrochemistry.

In addition, JPA 06-220459 discloses a waste plastic feeding system provided with a nitrogen-introducing line, a water- sealing vessel, a safety valve, and an oxygen content meter and/or a hydrocarbon content meter, while a pyrolysis oven is provided with a nitrogen-introducing line, a water-sealing vessel, and safety valves in order to provide pyrolysis-catalytic reforming type waste plastic liquefying equipment wherein combustible gas formed through pyrolysis of waste plastic is prevented from causing an explosion or a fire together with air entrained therein either in a waste plastic feeding system or in a pyrolysis oven.

As described above, varies devices have been made in the liquefaction apparatus and/or liquefaction/carbonization apparatus to improve decomposition efficiency and safety measure for generated gases.

However, since such a liquefaction apparatus and/or liquefaction/carbonization utilize hydrocarbon gas as an energy source in a closed system, it would be desirable to develop a safer liquefaction apparatus and/or liquefaction/carbonization.

Also, it would be desirable to develop a safe liquefaction apparatus and/or liquefaction/carbonization with simplified construction.

### SUMMARY OF THE INVENTION

According to the present invention, there is provided a pyrolytic decomposition apparatus comprising:
an inlet system for introducing an object;
a pyrolysis system having at least one heating chamber and a heating means for pyrolytically decomposing the object introduced by the inlet system;
a recovery and cooling system which recovers a part of the gas generated due to the pyrolytic decomposition as an oil component through a pipe; and
a gas temperature adjusting system, which allows heat exchange between a part of the gas from the recovery system and a part of the gas from the pyrolysis system to allow the pyrolytically decomposed gas attain a prescribed temperature before flowing into the pyrolysis system;
characterized in that said apparatus has an inert gas supply means for supplying an inert gas into the pyrolytically decomposed gas as a carrier gas circulated with the apparatus.

In the pyrolytic decomposition apparatus of the present invention, the inert gas supply means may also be connected to the pipe downstream of the pyrolytic system.

In the pyrolytic decomposition apparatus of the present invention, the pyrolytic decomposition apparatus may have a separator which separates the inert gas from the mixed gas, and the separated inert gas is again used as the carrier gas.

Also, in the pyrolytic decomposition apparatus of the present invention, a gas mainly comprising nitrogen is preferably used.

In the pyrolytic decomposition apparatus of the present invention, the gas from the separator may be used as a heat source.

In the pyrolytic decomposition apparatus of the present invention, a gas release valve is preferably provided downstream of the pyrolytic system.

Such a pyrolytic decomposition apparatus of the present invention may be used in various liquefaction/carbonization apparatus which converts plastics into oils.

Specifically, the present invention is directed to use of the pyrolytic decomposition apparatus of the present invention for separating hydrocarbon originated substances from an inflammable substance or a substance having a melting point higher than the pyrolytic temperature.

Also provided is use of the pyrolytic decomposition apparatus of the present invention for a liquefaction/carbonization apparatus which converts solid organic substance into an oil and hydrocarbon gas.

The present invention particularly relates to a liquefaction/carbonization apparatus for treating at least one member selected from the group consisting of waste plastics, waste tires, organic wastes and medical wastes.

Also, the present invention concerns a method for pyrolytically decomposing an organic substance in a pyrolysis apparatus, which comprising
incorporating an organic substance into a pyrolysis zone heated at a prescribed temperature to decompose the organic substance into hydrocarbon gas, an oil on which hydrocarbon is based, and the residual carbon; and
circulating the resulting hydrocarbon gas heated at a prescribed temperature through a heat exchanger;
said method is characterized by incorporating an inert gas into a place upstream of said pyrolysis zone.

### BRIEF DESCRIPTION OF THE DRAWINGS

FIG. 1 shows a schematic view showing an outline of an apparatus according to the present invention,
FIG. 2 is a schematic view showing an embodiment where the apparatus according to the present invention is applied to garbage treatment apparatus and
FIG. 3 shows a flowchart indicating a method for pyrolytically decomposing an organic substance according to the present invention.

### DESCRIPTION OF THE INVENTION

The present invention will now be described in detail with reference to the attached drawings.

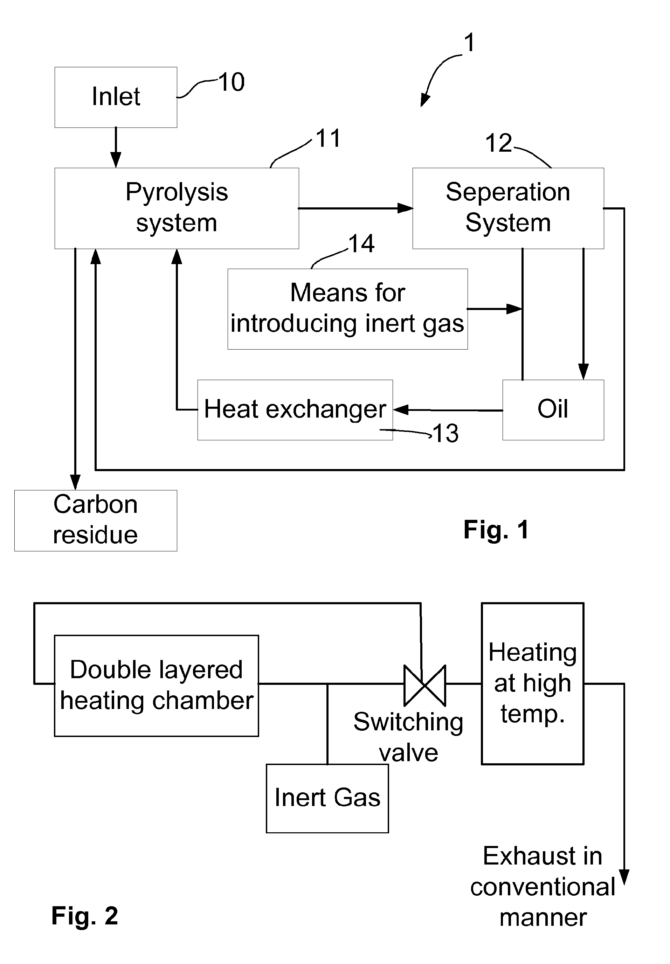

FIG. 1 shows a schematic view showing an outline of an apparatus according to the present invention.

The pyrolytic decomposition apparatus according to the present invention relates to a pyrolytic decomposition apparatus which pyrolytically decomposes objects of hydrocarbon originated substances (organic substances) into hydrocarbon oils hydrocarbon gas and carbon.

The term "hydrocarbon originated substance" is intended herein to mean solid substances mainly composed of hydrogen atoms and carbon atoms, and may be used interexchangeably with the term "organic substances". The objects may contain minor components such as oxygen, sulfur phosphor and/or metals.

Typical examples of hydrocarbon substances include, but are not restricted to, plastics and resins such as thermoplastic plastics and thermosetting plastics, paper, wood (particularly waste wooden products), tires (particularly waste tires), and mixtures thereof.

Referring to FIG.1, in the pyrolytic decomposition apparatus 1 of the present invention, solid hydrocarbon substance objects are first introduced into an inlet system 10, and the substances are forcibly transferred into a pyrolysis system 11.

The inlet system 10 may have a crusher which crushes large organic substances into a prescribed size, and any other optional devices known in the art.

The pyrolysis system 11 comprised of a normally sealed heating chamber heated by heated gas at a predetermined temperature (usually approximately 350 to 400°C) at which the organic substances are decomposed into gaseous components, liquid components and carbon.

Firstly, the gas is heated by a burner (not shown) at a prescribed temperature and then introduced into the heated chamber, and then a heated gas generated by pyrolytic decomposition of organic substances is circulated (for detail, see later description).

The gaseous component resulting from the pyrolysis of the organic substance objects in the pyrolysis system comprises a hydrocarbon gas (mixture of low molecular weight hydrocarbons) and is transferred to a separation system 12 by pipe.

The separation system 12 is mainly composed of a condenser which separates the organic substances into an oil component comprising hydrocarbons having a molecular weight higher than a prescribed level and gaseous component having a molecular weight higher than a prescribed level.

The separated oil component is collected, and the gaseous component may be used as a heat source via a heat exchanger 14 residing downstream of the condenser.

If the resulting volume gas is excessive, the excess gas may be stored in a reserve tank (not shown).

As may be required, the components other than hydrocarbon such as hydrogen sulfide may be purified through an optional waste gas treating means and then discharged out of the system in a safe manner (not shown), which is well-known in the art.

In the apparatus of the present invention, means 11 for introducing an inert gas introduces an inert gas into a position upstream of the pyrolysis system 11 and desirably a position downstream of the pyrolysis system 11. The introduction of inert gas upstream of the pyrolysis system 11 is to provide a carrier gas which carries heated gas and the introduction of the inert gas downstream of the pyrolysis system 11 is for the purpose of preventing explosion in an emergency.

Since the present invention includes means 11 for incorporating an inert gas, the heated gas contains a prescribed percentage of the inert gas. Consequently, at the time of the pyrolytic decomposition of the organic substances, there is no fear of dangerous gas (having a possibility of explosion or such). What is more, if the inert gas is incorporated downstream of the pyrolysis system, if any dangerous gas is generated, it can be diluted with the inert gas. Consequently, the apparatus of the present invention may be operated in a much safer manner. In addition, the apparatus of the present invention has a simple configuration where the means for incorporating an inert gas into an existing pyrolytically decomposing apparatus.

The means 11 comprises an inert gas source and injection means (one for circulating the inert gas and optionally the other for incorporation of the inert gas in an emergency).

In the present invention, the inert gas which can be used is not specifically restricted as long as it suitable for preventing an explosion. In a preferred embodiment of the present invention, the inert gas comprises nitrogen gas for easy handling and cost.

The inert gas may be incorporated in an earlier stage (upstream) of the pyrolysis system 11 depending upon the conditions of the gas flowing into the pyrolysis system to serve as a carrier gas. In an emergency (e.g., the temperature of the gas exiting from the pyrolysis system becoming unduly high), the inert gas may be introduced downstream of the pyrolysis system.

In addition, or alternatively, the pyrolytic decomposition apparatus of the present invention may have a configuration that components of the gas entering into the pyrolysis system 11 and/or the gas exiting the pyrolysis system 11 are monitored and the inert gas is introduced when an oxygen concentration is unduly high.

Consequently, the apparatus in this embodiment possesses a thermometer (not shown) and/or a meter for detecting an oxygen concentration (not shown). Also, as well known in the art, the pyrolytic decomposition apparatus of the present invention may have a release valve which discharges gas generated due to the pyrolytic treatment of the organic substance out of the apparatus.

As described above, introduction of the inert gas for circulation together with the hydrocarbon gas allows the temperature of the gas to be be kept constant, and the oxygen concentration to be decreased relatively.

Furthermore, in an emergency, the introduction of the inert gas such as nitrogen gas into a pipe downstream of the pyrolysis system lowers the possibility of explosion at the fullest extent. Specifically, use of an inert gas such as nitrogen gas stably responds to the amount of the pyrolyticaly decomposed gas generated relative to the amount of the heat source gas, exhibiting an advantageous effect that the amount of the pyrolytically decomposed gas generated is well following up with the change in the heat source gas.

This increases safety in comparison with the prior art where an inert gas is merely introduced in an emergency. The circulated inert gas can be separated from the circulation gas to be ready for the next use.

The pyrolytic decomposition apparatus according to the present invention can be applied to a wide variety of applications.

For example, the pyrolytic decomposition apparatus of the present invention may be applied to an pyrolytic decomposition apparatus for removing organic substance from an object to be cleaned up, where the object is inflammable or has a boiling point, melting point or decomposition point higher than the pyrolysis temperature.

For example, an iron made article treated with rubber or a resin based paint may be pyrolytically treated using the pyrolytic decomposition apparatus according to the present invention, whereby the rubber or the paint can be decomposed and, thus, the iron made article cleaned. In this case, the heating chamber of the pyrolysis system should have a size large enough to accommodate the article.

In such an application, plastics, rubbers, paint or such can effectively removed from an article made of a pyrolytically stable substance such as a metal or a ceramic without the need for any chemical or mechanical force.

Similarly the pyrolytic decomposition apparatus according to the present invention may make up a liquefaction/carbonization apparatus. The liquefaction/carbonization apparatus of the present invention can pyrolytically treat organic substances such as waste plastics, or waste tires, garbage, waste oils, medical wastes and the like. Specifically, the liquefaction/carbonization apparatus of the present invention may be employed in a safer manner.

It is possible to treat a mixture of organic substance such as a mixture of garbage having a large moisture content with plastics (i.e., mixed type garbage) in the apparatus of the present invention. In which case, any abnormality may be rapidly measured by the presence of a large moisture content.

When the present apparatus of the present invention is used for treating substances containing or consisting essentially of biodegradable materials such as garbage, for example, the apparatus may have the constitution as shown in the following FIG. 2. FIG. 2 is a schematic view showing an embodiment where the apparatus according to the present invention is applied to garbage treatment apparatus.

As shown in FIG. 2, the heated gas (for example, at 450degree C) carried by an inert gas is circulated in a double layered heating chamber in a closed manner. The double layered heating chamber can be incorporate substances to be treated substances while keeping the state that the interior of the chamber is sealed. Circulation of heated gas containing an inert gas pyrolytically decompose the organic substance having a large moisture content into steam, hydrocarbon gas, and residues mainly composed of carbon powder. After the circulation, the gas is further heated up to avoid generation of harmful halogen compounds as well known in the art. Optionally, the heated gas is introduced into water to recover halogen components in water.

In the circulation of heated gas, inert gas is introduced into the circulation gas to keep a safety gas state. By such a configuration, the apparatus of the present invention can be utilized for treating organic substances having a relatively high moisture content, for example, as much as 70%.

In addition, heat generated from the pyrolytical decomposition may be used for generating power. In other words, hot oil separated from the condenser or the hot gas generated by the pyrolytic decomposition of the organic substance may be stored.

For example, the generated heat may be stored as described in JPA 2002-327962. According to the solar heat storage system described in JPA 2002-327962., a solar heat storage system comprises a heat collecting lens; a heat collecting container provided to enable the heat collected through the lens to be received and containing a medium oil having a specific gravity of 1 to 2.5 g/cm3; a circulating passage of the oil having an oil feed tube, a feeding pipe and a return pipe; a thermal storage tank provided in the way of the circulating passage and containing a thermal storage oil for heat exchanging with the medium oil and a heat insulator covering the periphery of the oil; and a heating oil channel in which a heated oil flows. The heating oil is heated by the thermal storage oil in the tank, flowed outside to warm the water in a heat exchanger. In the apparatus of the present invention, the heat source may be employed instead of the heat collecting lens. The stored heat can be effectively utilized for heat source for power generation.

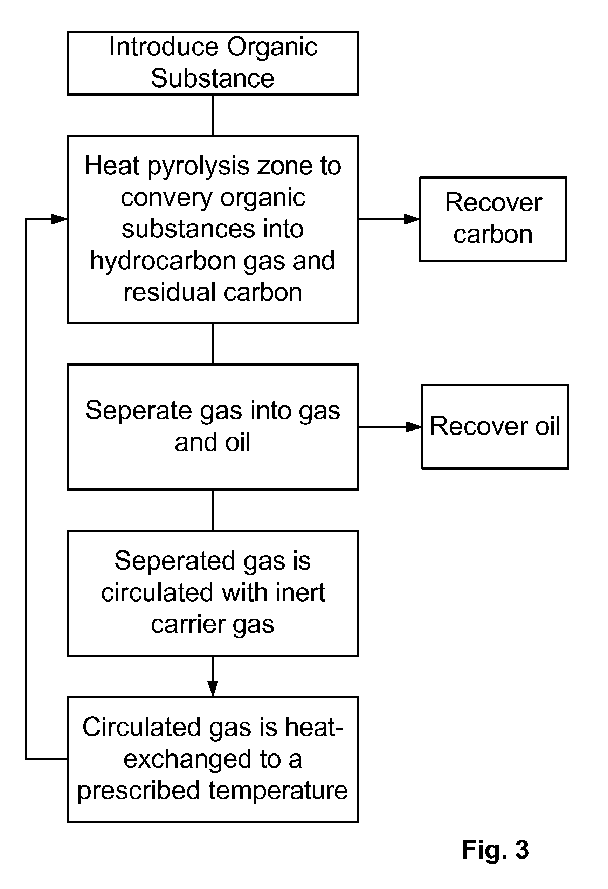

Next a method for pyrolytically decomposing an organic substance in the pyrolytic decomposition apparatus according to the present invention will now be described by referring to FIG. 3.

FIG. 3 shows a flowchart indicating a method for pyrolytically decomposing an organic substance according to the present invention.

First, an organic substance to be treated is introduced into a pyrolysis zone (heating chamber of the pyrolysis system). Then the heating zone is heated at a prescribed temperature.

As the temperature is increased the organic substances begin to pyrolytically decompose into a hydrocarbon gas and a residual carbon.

The resulting hydrocarbon gas is then separated into an oil component, which may be stored and a gaseous component, part of which may be circulated, and the remaining part stored.

The circulated gas is carried by introducing an inert gas as a carrier gas and it is then heat-exchanged to be a prescribed temperature.

The circulated gas is then introduced into the heating zone. While the circulation gas (a mixture of the hydrocarbon gas with the inert gas) is circulating, i.e., during the course of the pyrolytic decomposition of the organic substances, the condition of the circulation gas is monitored. If any abnormality is detected, inert gas is incorporated downstream of the heating zone.

## Claims

1. A pyrolysis apparatus comprising:
an inlet system for introducing an object;
a pyrolysis system having at least one heating chamber and a heating means which pyrolytically decomposes the object introduced by the inlet system;
a recovery and cooling system which recovers a part of the gas generated due to the pyrolytic decomposition as an oil component through a pipe; and
a gas temperature adjusting system, which performs heat exchange between a part of the gas from the recovery system and a part of the gas from the pyrolysis system to ensure the pyrolytically decomposed gas is at a prescribed temperature flowing into the pyrolysis system;
**characterized in that** said apparatus has an inert gas supply means which supplies an inert gas as a carrier gas for the pyrolytically decomposed gas circulated within the apparatus.

2. The apparatus as claimed in claim 1, wherein said inert gas supply means is also connected to the pipe downstream of the pyrolytic system.

3. The apparatus as claimed in claim 1 or 2, wherein said apparatus has a separator which separates the inert gas from the mixed gas, and the separated inert gas is reused as the carrier gas.

4. The apparatus as claimed in any one of claims 1 to 3, **characterized in that** said inert gas comprises nitrogen.

5. The apparatus as claimed in any one of claims 1 to 4, **characterized in that** the gas from the separator is used as a heat source.

6. The apparatus as claimed in any one of claims 1 to 5, **characterized in that** a gas release valve is provided downstream of the pyrolytic system.

7. Use of the apparatus as claimed in any one of claims 1 to 6 for separating hydrocarbon originated substances from an inflammable substance or a substance having a melting point higher than the pyrolytically decomposed temperature.

8. Use of the apparatus as claimed in any one of claims 1 to 6 for a liquefaction/carbonization apparatus which converts solid organic substance into an oil and hydrocarbon gas.

9. Use as claimed in claim 8, wherein in that said solid organic substance comprises at least one member selected from the group consisting of waste plastics, waste tires, organic wastes and medical wastes.

10. A method for pyrolytically decomposing an organic substance in a pyrolysis apparatus, which comprising
incorporating an organic substance into a pyrolysis zone heated at a prescribed temperature to decompose the organic substance into hydrocarbon gas, an oil on which hydrocarbon is based, and the residual carbon; and
circulating the resulting hydrocarbon gas heated at a prescribed temperature through a heat exchanger;
said method is **characterized by** incorporating an inert gas into a place upstream of said pyrolysis zone.
